**Europäisches Patentamt**

**European Patent Office**

**Office européen des brevets**

(11) Publication number: **0 375 078 B1**

## EUROPEAN PATENT SPECIFICATION

(45) Date of publication of patent specification: **24.05.95**

(51) Int. Cl.6: **C08G 59/62**, C09D 163/00

(21) Application number: **89203301.0**

(22) Date of filing: **21.12.89**

(54) Polyether resins, and process for preparing the same.

(30) Priority: **23.12.88 GB 8830176**

(43) Date of publication of application:
**27.06.90 Bulletin 90/26**

(45) Publication of the grant of the patent:
**24.05.95 Bulletin 95/21**

(84) Designated Contracting States:
**BE CH DE ES FR GB IT LI NL SE**

(56) References cited:
**EP-A- 0 003 166**
**EP-A- 0 244 897**
**EP-A- 0 281 213**
**US-A- 2 731 444**

(73) Proprietor: **SHELL INTERNATIONALE RE-SEARCH MAATSCHAPPIJ B.V.**
**Carel van Bylandtlaan 30**
**NL-2596 HR Den Haag (NL)**

(72) Inventor: **André, Olivier Louis Pierre**
**Postbus 30**
**B-1348 Ottignies**
**Louvain-La-Neuve (BE)**
Inventor: **Scholten, Henricus Paulus Hubertus**
**Postbus 30**
**B-1348 Ottignies**
**Louvain-la-Neuve (BE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3. 10/3.09/3.3.3)

EP 0 375 078 B1

**Description**

The invention relates to polyether resins, their process for preparing, their use in coating compositions, a process for coating a surface by applying said compositions and the cured films obtained by use of these compositions.

In European patent specification No. 3,166, a process has been disclosed which comprises reacting at 100 °C a glycidyl ester of a mixture of $C_{9-11}$ branched aliphatic acids commercially known as "CARDURA E" (registered trade mark), with trimethylolpropane, (hereinafter "TMP") in a glycidyl/primary hydroxyl group equivalent ratio of 2:3 in the presence of 0.5%wt, based on glycidyl ester, of a boron trifluoride etherate etherification catalyst.

The product prepared according to that particular recipe is dark coloured, and has molecular weight distribution (MWD) characteristics shown in the comparative example included herein. Hence, such product is less suitable for coating applications as is apparent from the undesirable phenomenon of cratering.

In order to provide resin systems that are suitable for coatings, it has been found that polyether resins can be prepared that have an improved colour and a narrow molecular weight distribution, are essentially free from unreacted primary alcohol starting material, and substantially do not contain unconverted epoxy groups. Moreover, cured coatings prepared from said polyether films have very good properties in general industrial stoving application.

The present invention provides a process for the preparation of a polyether resin having an epoxy group content of less than 0.2 meq/g and containing on average from $\frac{n}{3}$ - 0.5 to $\frac{n}{3}$ + 1.5 primary hydroxyl groups, by reacting a glycidyl ester of a $C_{9-11}$ branched aliphatic acid with an aliphatic primary polyhydric alcohol having n primary hydroxyl groups, and 5 to 16 carbon atoms, n having a value of 3 up to 6, in the presence of an etherification catalyst characterised in that the etherification catalyst is a tin, zinc or iron compound. Reaction products containing on average from $\frac{n}{3}$ - 0.4 to $\frac{n}{3}$ + 0.4 primary hydroxyl groups are preferred.

Preferably the relative amount of starting material is such that the resin contains essentially no free reactants. Hence, the preferred relative amount, as expressed by the mole ratio of glycidyl ester versus alcohol ranges of from 1:0.4 to 1:2.0 for n is 3; of from 1:0.45 to 1:0.7 for n is 4; of from 1:0.45 to 1:0.65 for n is 5; and of from 1:0.4 to 1:0.6 for n is 6. Accordingly, sufficient primary hydroxyl groups will remain in the final product to ensure that the latter provides for adequate performance in curing. When n is 3, the most preferred ratio is from 1:0.5 to 1:0.8.

Surprisingly, it was found that by proper choice of the etherification catalyst resins were obtained that also showed low cratering in the cured resin. It is believed that the catalysts employed in this invention selectively support the reaction of the glycidyl ester with a primary hydroxyl group, thereby sidestepping unwanted reactions between alcohols, between glycidyl esters, or between glycidyl esters and secondary hydroxyl groups. These side-reactions take place in the presence of prior art catalysts such as boron trifluoride etherate. For instance, with gel permeation chromatography (GPC) the prior art product (using TMP) can be shown to contain several side-products. Moreover that product contains about twice the number of molecules in which only one primary hydroxyl group has reacted, and about ten times the number of molecules in which all three primary hydroxyl groups have reacted as to the products obtainable with this invention. This is reflected in a combination of relatively high average molecular weight, and a broad molecular weight distribution being found in the prior art product. It is observed that resins having such unwanted characteristics display cratering when applied in coating. In contrast thereto, the process of this invention leads to selective production of derivatives in which the proportion of converted primary hydroxyl groups can be set at predetermined value, preferably 2 when converting trihydric alcohols, 3 for tetrahydric, and 3 or 4 for penta- or hexahydric alcohols. In contrast to the prior art, the products of this invention are characterised by having a molecular weight distribution, calculated as $\frac{Mz}{Mw}$, of less than 1.10.

Suitable examples of etherification catalysts include halides, and salts of alkanoic and naphthenic acids, particularly of those having in the range of from 2 to 30 carbon atoms per molecule. Very suitable catalysts are tin, zinc or iron chlorides, tin or zinc alkanoates, dibutyltin dialkanoates, and iron salts of naphthenic acids. Preferred catalysts are tin(II)octoate, tin dichloride, dibutyltin dilaurate and tin tetrachloride, the former being most preferred.

The catalyst may be employed at relatively low amounts and low reaction temperatures. Thus, addition of 0.01 to 0.4% m/m of catalyst while heating the reaction mixture to a temperature in the range of from 100 to 200 °C is adequate. Particularly suitable amounts of catalyst range from 0.03 to 0.35% m/m, most suitable from 0.05 to 0.2% m/m. The reaction may very suitably be carried out at a temperature in the range of from 115 to 190 °C, preferably from 130 to 175 °C.

2

The aliphatic primary tri- to hexahydric alcohol to be reacted comprises three to six primary hydroxyl groups (i.e., $HOCH_2$-), optionally one or more ether links, and preferably no other secondary ($HOCH_2$-), or tertiary ($HOC_3$-) hydroxyl groups. Suitable compounds are any of the isomers corresponding to tri-(hydroxymethyl)ethane, -propane, -butane, -pentane, -hexane, -heptane, -octane, and -nonane; tetra-(hydroxymethyl)methane, -ethane, -propane, -butane, -pentane, -hexane, -heptane, and -octane; penta-(hydroxymethyl)ethane, -propane, -butane, -pentane, -hexane, and -heptane; and hexa(hydroxymethyl)-ethane, -propane, -butane, -pentane, and -hexane. Also suitable are the dimers or ethylene oxide modified derivatives of the compounds above, however, with the proviso that the total amount of primary hydroxyl groups is of from 4 to 6, and the total amount of carbon atoms is of from 5 to 16. It is understood that aliphatic tri- to hexahydric primary alcohol in this application also includes aliphatic alcohols having one or more non-conjugated unsaturated links.

In a preferred embodiment the aliphatic primary alcohol is TMP or DTMP (i.e., the dimer of TMP). The most preferred aliphatic primary alcohol is TMP melting at 58 °C and being a solvent for the relevant glycidyl ester to be reacted.

The polyether resins are suitable for use in high-performance automotive high solids topcoats. Attractive cross-linking resins in this respect are for example those disclosed in European patent application No. 244,897. Particularly suitable cross-linking agents are the aminoplast-type resins, such as alkoxylated reaction products of formaldehyde with melamine or benzoguanamide. Other suitable cross-linking agents include urea-aldehyde resins, phenol-aldehyde resins, and blocked polyisocyanates. Suitable catalysts which may be employed in the curable coating compositions are acids such as orthophosphoric acid or p-toluene-sulphonic acid. These catalysts may be used in an amount in the range of from, for example, 0.05 to 2% by weight, calculated on polyether and cross-linking resin.

The relative proportions of polyether resin and curing agent are those generally employed in the curable binders, typically of from 5 to 50% by weight, calculated on the total of polyether resin and cross-linking resin.

The polyether resins of this invention are primarily intended to be employed in surface coatings. Other applications such as in laminates or castings are also possible. The resins may be blended with conventional solvents such as aliphatic or aromatic hydrocarbons. Pigments, fillers, dispersing agents and other components known for coating formulations may be added to the curable binder system comprising the polyethers made in accordance with the process of this invention.

The curable coating composition can be applied by a variety of methods as known in the art, for example by spraying, dipping or roller coating. The coatings can be hardened by stoving, for example at temperatures from 100 to 300 °C, with curing temperatures varying from, for example, 10 seconds to 30 minutes.

The invention will be further understood from the following examples.

EXAMPLES

a) The experiments were carried out in a 1 litre glass reactor equipped with a stainless steel stirrer, nitrogen inlet, heating mantle, a thermocouple and a reflux condensator.

First, 1 mole TMP and 2 mole CARDURA E10 ("CE10"; registered trade mark) were charged into the reactor and homogenised by gradually increasing the temperature. When the system was homogenised, normally at about 100 °C a catalyst was added. Then, the reactor was heated to the desired reaction temperature. The reaction was followed by withdrawing samples at regular intervals and determining the decreasing epoxy group content (EGC) value. The reaction was stopped by cooling. Experimental data are summarised in table 1.

The resins with tin(II) octoate and boron trifluoride etherate were further evaluated in lacquer formulations comprising the following compositions:

| Lacquer composition | I (g) | II (g) |
|---|---|---|
| Resins | 40.0 | 35.0 |
| Hexamethoxymethylmelamine, "HMMM" | 10.0 | 15.0 |
| Xylene | 12.5 | 12.5 |
| para-toluenesulphonic acid | 1.5 | 1.5 |
| (10% in butylOXITOL; registered trade mark) | | |

The clear lacquer was applied onto a bare steel panel in a dry film thickness of approximately 35 μm. The panel was stoved at a temperature of 140 °C for 30 minutes, after which the lacquer properties were assessed (table 2).

b) The procedure of a) was repeated using one of the alcohols below and CE10 in a glycidyl/primary hydroxy equivalent ratio of 2:3 in the presence of different amounts of tin(II)octoate. Experimental data of the resin preparation are summarised in table 3.

| Name | Abbreviation | Functionallity |
|---|---|---|
| Trimethylolpropane | TMP | 3 |
| Tri(hydroxyethyl)isocyanurate | THEIC | 3 |
| Di(trimethylolpropane) | DTMP | 4 |

c) The procedure of b) was repeated however in a glycidyl/primary alcohol mol ratio of 2:1 in the presence of 0.16% m/m of tin(II)octoate. Experimental data of the resin preparation are summarised in table 4. Moreover, these resins were further evaluated by assessing the lacquer properties of lacquer formulations prepared according to compositions I and II in a). The physical data are summarised in table 5.

Table 5

| Alc. | Composition | thickness (μm) | MEK (dbl. rubs) | Flexibility (kg.cm) | Hardness König |
|---|---|---|---|---|---|
| TMP | I | 35 | 42 | 46 | 24 |
|  | II | 34 | >100 | <12 | 143 |
| THEIC* | I | 33 | >100 | 23 | 125 |
|  | II | 22 | >100 | <12 | 167 |
| DTMP | I | 35 | 90 | 35 | 54 |
|  | II | 33 | >100 | <12 | 157 |

* using methylPROXITOL (registered trade mark), instead of xylene.

4

EP 0 375 078 B1

Table 1:

| Catalyst | Intake (g) | | | Temp. | time of | | MWD | | free | |
|---|---|---|---|---|---|---|---|---|---|---|
| | TMP | CE10 | cat. | (°C) | reaction | colour | Mz/Mw | Mz | alcohol | EGC |
| | | | | | (h.) | (Hazen) | | | (% m/m) | meq/g |
| BF3:OEt2* | 100 | 367 | 1.9 | 100 | 0.80 | 1190 | 1.14 | 800 | 2.0 | 0.04 |
| SnCl4 | 67 | 251 | 0.3 | 160 | 1.50 | 230 | 1.04 | 620 | <<1.5 | 0.08 |
| SnCl2 | 67 | 251 | 0.3 | 160 | 2.00 | 230 | 1.03 | 580 | <<1.5 | 0.09 |
| Sn(II)Oct | 100 | 367 | 0.8 | 160 | 2.00 | 210 | 1.03 | 610 | <<1.5 | 0.07 |

* for comparison

Table 2:

| Catalyst | Composition | thickness (μm) | MEK (dbl. rubs) | Flexibility (kg.cm) | Hardness König | Cratering |
|---|---|---|---|---|---|---|
| BF3:OEt2* | I | 32 | 56 | 35 | 26 | substantial |
| | II | 35 | >100 | <12 | 122 | |
| Sn(II)Oct | I | 35 | 42 | 46 | 24 | little to |
| | II | 34 | >100 | <12 | 143 | negligible |

* for comparison

Table 3:

| | Intake (g) | | | Temp. | time of reaction | colour | MWD | | free alcohol | EGC |
|---|---|---|---|---|---|---|---|---|---|---|
| | alc. | CE10 | Sn(II) octoate | (°C) | (h.) | (Hazen) | Mz/Mw | Mz | (% m/m) | meq/g |
| TMP | 55 | 200 | 0.55 | 130 | 2.5 | 210 | 1.04 | 610 | <<1.5 | 0.09 |
| | 100 | 363 | 0.76 | 160 | 1.3 | 220 | 1.02 | 610 | <<1.5 | 0.07 |
| | 55 | 200 | 0.15 | 175 | 1.9 | 220 | 1.04 | 610 | <<1.5 | 0.08 |
| THEIC | 98 | 182 | 0.89 | 175 | 1.8 | 890 | 1.08 | 710 | 4 | 0.10 |
| DTMP | 78 | 200 | 0.44 | 145 | 3.8 | 550 | 1.04 | 760 | 3 | 0.10 |
| | 78 | 200 | 0.45 | 160 | 2.1 | 570 | 1.04 | 760 | 2 | 0.09 |
| | 78 | 200 | 0.16 | 175 | 3.8 | 570 | 1.03 | 760 | 2 | 0.08 |

Table 4:

| | Intake (g) | | | Temp. | time of reaction | colour | MWD | | free alcohol | EGC |
|---|---|---|---|---|---|---|---|---|---|---|
| | alc. | CE10 | Sn(II) octoate | (°C) | (h.) | (Hazen) | Mz/Mw | Mz | (% m/m) | meq/g |
| TMP | 134 | 502 | 1.0 | 160 | 4.0 | 220 | 1.03 | 590 | <<1.5 | 0.07 |
| DTMP | 250 | 502 | 1.2 | 160 | 4.2 | 570 | 1.04 | 710 | <<1.5 | 0.09 |

d) 13.4 g of TMP and 25.1 g of CE 10 are reacted in a 1 L reactor, equipped with an anchor stirrer, reflux condenser and a nitrogen inlet. The mixture is homogenised and the temperature is raised to 100 to 120 °C. At that temperature 38.5 mg of stannous octoate is added and the exotherm is allowed to proceed to a final temperature of 175 °C, which is maintained until the EGC is 0.02 mmol/g. The viscosity of the reaction product was 16.9 Pa.s and the MWD, calculated as $\frac{Mz}{Mw}$ , was 1.06. The product contained only 9 %w of unreacted TMP.

**Claims**

1. A process for the preparation of a polyether resin having an epoxy group content of less than 0.2 meq/g and containing on average from $\frac{n}{3}$ - 0.5 to $\frac{n}{3}$ + 1.5 primary hydroxyl groups, by reacting a glycidyl ester of a $C_{9-11}$ branched aliphatic acid with an aliphatic primary polyhydric alcohol having n primary hydroxyl groups, and 5 to 16 carbon atoms, n having a value of 3 to 6, in the presence of an etherification catalyst characterised in that the etherification catalyst is a tin, zinc or iron compound.

2. A process as claimed in claim 1 in which the polyether resin contains on average from $\frac{n}{3}$ - 0.4 to $\frac{n}{3}$ + 0.4 primary hydroxyl groups.

3. A process as claimed in claim 1, wherein the relative amount of reactants as expressed by the mole ratio of glycidyl ester versus alcohol ranges of from 1:0.4 to 1:2.0 for n is 3; of from 1:0.45 to 1:0.7 for n is 4; of from 1:0.45 to 1:0.65 for n is 5; and of from 1:0.4 to 1:0.6 for n is 6.

4. A process as claimed in claim 3 wherein the ratio is from 1:0.5 to 1:0.8 when n = 3.

5. A process as claimed in any one of claims 1 to 4, characterised in that the etherification catalyst is a halide salt, or a salt of an alkanoic or naphthenic acid.

6. A process as claimed in claim 5, characterised in that the etherification catalyst is a chloride salt, a tin or zinc alkanoate, a dibutyltin(IV)alkanoate, or an iron naphthenate.

7. A process as claimed in claim 6, characterised in that the etherification catalyst is tin(II)octoate.

8. A process as claimed in any one of claims 1 to 7, characterised in that the primary alcohol is trimethylolpropane, or di(trimethylolpropane) ether.

9. A process as claimed in any one of claims 1 to 8 which is carried out at a temperature in the range of from 115 to 175 °C.

10. A polyether resin as prepared by any one of claims 1 to 9.

11. A curable coating composition comprising a polyether resin as claimed in claim 10 and a cross-linking resin.


**Patentansprüche**

1. Verfahren zur Herstellung eines Polyetherharzes mit einem Epoxygruppengehalt von weniger als 0,2 mval/g und einem Gehalt von durchschnittlich $\frac{n}{3}$ - 0,5 bis $\frac{n}{3}$ + 1,5 primären Hydroxylgruppen durch Umsetzung eines Glycidylesters einer verzweigten aliphatischen $C_{9-11}$-Säure mit einem aliphatischen primären mehrwertigen Alkohol mit n primären Hydroxylgruppen und 5 bis 16 Kohlenstoffatomen, wobei n einen Wert von 3 bis 6 aufweist, in Gegenwart eines Veretherungskatalysators, dadurch gekennzeichnet, daß der Veretherungskatalysator eine Zinn-, Zink- oder Eisenverbindung ist.

2. Verfahren nach Anspruch 1, worin das Polyetherharz durchschnittlich $\frac{n}{3}$ - 0,4 bis $\frac{n}{3}$ + 0,4 primäre Hydroxylgruppen enthält.

3. Verfahren nach Anspruch 1, wobei die relative, als Molverhältnis des Glycidylesters zu Alkohol ausgedrückte Menge an Reaktionspartnern für n gleich 3 im Bereich von 1:0,4 bis 1:2,0, für n gleich 4 im Bereich von 1:0,45 bis 1:0,7, für n gleich 5 im Bereich von 1:0,45 bis 1:0,65 und für n gleich 6 im Bereich von 1:0,4 bis 1:0,6 liegt.

4. Verfahren nach Anspruch 3, wobei das Verhältnis bei n gleich 3 1:0,5 bis 1:0,8 beträgt.

5. Verfahren nach einem der Ansprüche 1 bis 4, dadurch gekennzeichnet, daß der Veretherungskatalysator ein Halogenidsalz oder ein Salz einer Alkan- oder Naphthensäure ist.

6. Verfahren nach Anspruch 5, dadurch gekennzeichnet, daß der Veretherungskatalysator ein Chloridsalz, ein Zinn- oder Zinkalkanoat, ein Dibutylzinn(IV)alkanoat oder ein Eisennaphthenat ist.

7. Verfahren nach Anspruch 6, dadurch gekennzeichnet, daß der Veretherungskatalysator Zinn(II)octoat ist.

8. Verfahren nach einem der Ansprüche 1 bis 7, dadurch gekennzeichnet, daß als primärer Alkohol Trimethylolpropan oder Di(trimethylolpropan)ether vorliegt.

9. Verfahren nach einem der Ansprüche 1 bis 8, welches bei einer Temperatur im Bereich von 115 bis 175°C durchgeführt wird.

10. Polyetherharz, wie nach einem der Ansprüche 1 bis 9 hergestellt.

11. Härtbare Beschichtungszusammensetzung, bestehend aus einem Polyetherharz nach Anspruch 10 und einem Vernetzungsharz.

**Revendications**

1. Un procédé pour la préparation d'une résine de polyéther ayant une teneur en groupes époxy de moins de 0,2 méq/g et contenant en moyenne de (n/3 - 0,5) à (n/3 + 1,5) groupes hydroxyle primaires, en faisant réagir un ester glycidique d'un acide aliphatique ramifié en $C_{9-11}$ avec un alcool polyhydrique primaire aliphatique ayant n groupes hydroxyle primaires, et 5 à 16 atomes de carbone, n ayant une valeur de 3 à 6, en présence d'un catalyseur d'éthérification, caractérisé en ce que le catalyseur d'éthérification est un composé de l'étain, du zinc ou du fer.

2. Un procédé selon la revendication 1, dans lequel la résine de polyéther contient en moyenne de (n/3-0,4) à (n/3 + 0,4) groupes hydroxyle primaires.

3. Un procédé selon la revendication 1, dans lequel les quantités relatives des corps en réaction telles qu'exprimées par le rapport molaire entre l'ester glycidique et l'alcool sont comprises entre 1:0,4 et 1:2,0 pour n = 3 ; entre 1:0,45 et 1:0,7 pour n = 4 ; entre 1:0,45 et 1:0,65 pour n = 5 ; et entre 1:0,4 et 1,06 pour n = 6.

4. Un procédé selon la revendication 3, dans lequel le rapport est compris entre 1:0,5 et 1:0,8 quand n = 3.

5. Un procédé selon l'une quelconque des revendications 1 à 4, caractérisé en ce que le catalyseur d'éthérification est sel d'acide halogénhydrique ou un sel d'un acide alcanoïque ou naphténique.

6. Un procédé selon la revendication 5, caractérisé en ce que le catalyseur d'éthérification est un chlorure, un alcanoate d'étain ou de zinc, un alcanoate de dibutylétain(IV) ou un naphténate de fer.

7. Un procédé selon la revendication 6, caractérisé en ce que le catalyseur d'éthérification est l'octanoate d'étain(II).

8. Un procédé selon l'une quelconque des revendications 1 à 7, caractérisé en ce que l'alcool primaire est le triméthylolpropane ou l'éther de di(triméthylolpropane).

9. Un procédé selon l'une quelconque des revendications 1 à 8, qui est mis en oeuvre a une température comprise entre 115 et 175°C.

10. Une résine de polyéther préparée par un procédé selon l'une quelconque des revendications 1 à 9.

11. Une composition de revêtement durcissable comprenant une résine de polyéther selon la revendication 10 et une résine réticulante.